# EUROPÄISCHE PATENTSCHRIFT

(11) **EP 3 061 212 B1**
(45) Veröffentlichungstag und Bekanntmachung des Hinweises auf die Patenterteilung: **11.07.2018**
(21) Anmeldenummer: 14792398.1
(22) Anmeldetag: 19.09.2014
(51) Int. Cl.: B66B 13/22, H04L 12/933, B66B 5/00, H04L 12/40, H04L 12/24

(54) **VERFAHREN UND VORRICHTUNG ZUR INBETRIEBNAHME EINER AUFZUGSANLAGE**
METHOD AND DEVICE FOR OPERATING A LIFT SYSTEM
PROCÉDÉ ET DISPOSITIF DESTINÉ À LA MISE EN SERVICE D'UNE INSTALLATION D'ASCENSEUR

(30) Priorität: 23.10.2013 EP 13189801; 05.12.2013 EP 13195851
(43) Veröffentlichungstag der Anmeldung: 31.08.2016
(73) Patentinhaber: Inventio AG, 6052 Hergiswil (CH)
(72) Erfinder: SONNENMOSER, Astrid, CH-6280 Hochdorf (CH); HESS, Martin, CH-6340 Baar (CH); TSCHUPPERT, Reto, CH-6015 Luzern (CH); LUSTENBERGER, Ivo, CH-6018 Buttisholz (CH)
(86) Internationale Anmeldenummer: PCT/EP2014/070007
(87) Internationale Veröffentlichungsnummer: WO 2015/058913

(56) Entgegenhaltungen:
- CA-A1- 2 844 522
- DE-A1-102004 062 967
- US-A1- 2007 080 026

## Beschreibung

Die Erfindung betrifft ein Verfahren und eine Vorrichtung zur Inbetriebnahme einer Aufzugsanlage gemäss den unabhängigen Patentansprüchen.

Aufzugsanlagen sind mit Überwachungseinrichtungen oder Sicherheitskreisen versehen. Diese Sicherheitskreise bestehen typischerweise aus in Serie geschalteten Sicherheitselementen. Diese Sicherheitselemente können beispielsweise den Zustand von Schacht- oder Kabinentüren überwachen. Dabei sind elektromechanische Sicherheitskreise oder auch busbasierte Sicherheitskreise bekannt. Der sichere Betrieb von solchen Sicherheitskreisen wird regelmässig überprüft. Sicherheitsschaltungen und Testverfahren von solchen Schaltungen sind beispielsweise aus EP 1 159 218, WO 2010/097404 oder WO 2013/020806 bekannt. Aus diesem Stand der Technik geht aber nicht hervor, ob oder inwiefern bei der Inbetriebnahme von Aufzugsanlagen eine Überprüfung der Sicherheitsschaltung erfolgt.

Bei der Inbetriebnahme von bekannten Sicherheitskreisen werden die Möglichkeiten eines busbasierten Sicherheitskreises nicht völlig ausgeschöpft. Es wird bisher "klassisch" verfahren, indem jeder Sensor auf dessen korrekte Funktion und Montage einzeln überprüft wird. Dabei werden Sensoren überbrückt oder manuell betätigt, so dass eine Überprüfung nicht im tatsächlichen Betriebszustand möglich ist und dabei Störungen oder Fehlmontagen möglicherweise nicht erkannt werden. Ferner ist eine solche Inbetriebnahme zeit- und personalaufwendig.

Die US 2007/080026 A1 beschreibt ein Verfahren zur Inbetriebnahme einer Aufzuganlage mit einer Anlagensteuerung. Ein für unterschiedliche Anlagensteuerungen geeignetes Steuerungsprogramm enthält verschiedene Steuerungsfunktionen, wobei das Steuerungsprogramm zum Betrieb der Beförderungsanlage in der Anlagensteuerung ausgeführt wird. BeimVerfahren zur Inbetriebnahme werden Identifikationsnummern von Komponenten der Aufzuganlage erkannt und überprüft, ob die erkannten Identifikationsnummern zu einer zugelassenen Komponentenkombination gehören. Ausgehend davon wird ein Anlagensteuerungstyp erkannt und verschiedene Steuerungsfunktionen im Steuerungsprogramm in Abhängigkeit des erkannten Anlagensteuerungstyps aktiviert. Werden Identifikationsnummern erkannt, die zu keiner zugelassenen Komponentenkombination gehören, wird die Inbetriebnahme der Aufzuganlage unterbrochen.

Die DE 10 2004 062 967 A1 beschreibt ein Verfahren zum Konfigurieren von Geräten in einem Computernetzwerk. Dabei liest und erkennt ein Computerprogramm mit einem Lesemodul Einstellungen mehrerer Geräte und baut aus den gewonnenen Daten Tabellen auf, mit denen ein Optimierungsmodul Kollisionen und Widersprüche durch Wahl modifizierter Einstellungen beseitigt.

Es ist daher Aufgabe der Erfindung, ein Verfahren/eine Vorrichtung anzugeben, welche die Probleme des Bekannten löst und bei welchen insbesondere eine Aufzugsanlage schnell und zuverlässig in Betrieb genommen werden kann.

Diese Aufgabe wird mit einem Verfahren und einer Vorrichtung mit den Merkmalen der unabhängigen Patentansprüche gelöst.

Eine Aufzugsanlage weist eine Steuereinheit auf. Die Anlage ist mit einem Bus und einer Mehrzahl von Busknoten versehen, die mit der Steuereinheit über den Bus verbunden sind.

Jedem Busknoten ist wenigstens ein Sensor und/oder Aktor zugeordnet, welcher Bestandteile der Aufzugsanlage überwacht und/oder steuert.

Erfindungsgemäss erfasst dabei die Steuereinheit bei der Inbetriebnahme der Aufzugsanlage in einem ersten Schritt für jeden Busknoten knotenspezifische Daten. Als knotenspezifische Daten werden im Sinne der vorliegenden Erfindung Daten verstanden, welche vom jeweiligen Busknoten der Steuereinheit zur Verfügung gestellt werden und den Busknoten beschreiben. Das können beispielsweise Daten sein, welche Aufschluss über einen die Art des dem Busknoten zugeordneten Sensors oder Aktors geben, beispielsweise ob der Sensor einen Zustand einer Tür (offen/geschlossen) überwacht, die Position von beweglichen Teilen ermittelt, eine Drehzahl eines Motors erfasst, oder eine elektrische Grösse in einem Stromkreis, ein Gewicht oder eine Beschleunigung von beweglichen Teilen misst. Bei den Aktoren sind knotenspezifische Daten beispielsweise, dass der Aktor eine Tür verriegeln oder betätigen kann.

Weitere knotenspezifische Daten können auch ein Identifikationscode des Busknotens, oder der dem Busknoten zugeordneten Sensoren/Aktoren sein, Daten welche einen Zustand des entsprechenden Sensors/Aktors bezeichnen (z.B. offen oder geschlossen) und ggf. auch zeigen, wann eine Zustandsänderung (z.B. von offen auf geschlossen) stattgefunden hat.
Die Steuereinheit erlangt somit nach Durchführung des ersten Schrittes Kenntnis über die angeschlossenen Busknoten der Aufzugsanlage und erhält folglich ein Gesamtbild des Sicherheitskreises der Aufzugsanlage.

In einem zweiten Schritt wird eine Verifikation durchgeführt. Diese Verifikation kann einen Vergleich umfassen, in dem die vorher erfassten knotenspezifischen Daten mittels der Steuereinheit mit Daten einer Teilnehmerliste verglichen werden. Die Teilnehmerliste definiert eine Erwartungshaltung, welche Busknoten welche Eigenschaften aufweisen sollen. Dabei wird ermittelt, ob die erfassten Daten mit den in der Teilnehmerliste vorhandenen Daten übereinstimmen. Alternativ oder optional kann die Verifikation weiter eine Funktionsprüfung der Aufzugsanlage umfassen. Dabei überprüft die Steuereinheit, ob die angeschlossenen Sensoren aufgrund einer provozierten Situation erwartete Signale senden und einwandfrei funktionieren. Desweitern alternativ oder optional kann die Verifikation eine Plausibilitätsprüfung umfassen, bei welcher überprüft wird, ob die angeschlossenen Sensoren oder Sensorgruppen durch die Aufzugsanlage vorgegebene logische Kriterien erfüllen.

Führt die Verifikation zu einem positiven Ergebnis, kann eine Mitteilung für einen Bediener ergehen, die Inbetriebnahme abzuschliessen und die Aufzugsanlage für den Normalbetrieb freizugeben.

Bei obigem Vergleich bilden die Erwartungshaltung und der festgestellte Ist-Zustand Eingaben für eine Verifikation. Die Verifikation selbst kann verschiedene Komponenten umfassen. In einer Grundverifikation wird die Erwartungshaltung mit dem Ist-Zustand verglichen. Dabei wird geprüft, ob von jedem Sensortyp eine entsprechende Anzahl vorhanden ist. Bei einer spezifischen Verifikation werden für bestimmte Sensortypen oder Gruppen spezifische Tests durchgeführt. Über Quervergleiche oder zusätzliche Informationen kann die Funktion der Sensoren überprüft werden.

Schliesslich kann vor dem Abschluss der Inbetriebnahme bzw. der Freigabe für den Normalbetrieb ein Funktionstest durchgeführt werden, in dem die Funktion eines jeden Sensors mindestens ein Mal geprüft wird. Insbesondere kann für jeden Sensor geprüft werden, ob ein Zustandswechsel (beispielsweise von geschlossen zu offen) erkannt werden kann.

Die Verifikation kann bei beispielsweise ab Werk vorkonfigurierten Sensoren ausgelöst werden, wenn alle vorkonfigurierten Sensoren erkannt wurden. In diesem Fall entspricht die Erwartungshaltung dem Ist-Zustand. Die Verifikation kann alternativ aber auch dadurch ausgelöst werden, dass Konfigurationsdaten durch die Steuereinheit empfangen werden, dass eine manuelle Konfiguration abgeschlossen wurde oder dass gelernte Sensoren betätigt werden.

Die Verifikation kann also sowohl vollständig manuell als auch vollständig automatisch vorgenommen werden.

Die Teilnehmerliste muss dabei nicht zwangsläufig in der Steuereinheit gespeichert sein. Es genügt, wenn die Teilnehmerliste der Steuereinheit zur Verfügung gestellt wird, z.B. von einem Server, an welchem die Steuereinheit angeschlossen ist oder von einem weiteren Busknoten der Aufzugsanlage.

Wenn die Daten nicht übereinstimmen, ergeht in einem dritten Schritt für Abweichungen zwischen den erfassten knotenspezifischen Daten und den Daten der Teilnehmerliste eine Mitteilung für einen Bediener. Diese Mitteilung kann für eine Abweichung oder einen Knoten einzeln erfolgen oder für mehrere Abweichungen gemeinsam.

Das erfindungsgemässe Verfahren ermöglicht eine exakte Diagnose, welcher Busknoten eine Abweichung zum Sollstatus gemäss Teilnehmerliste aufweist. Anders als bei bekannten elektromechanischen Sicherheitskreisen, mit welchen eine Unterteilung in mehrere Teilstücke nicht möglich ist, können Probleme spezifisch erkannt werden. Ausserdem kann die Sicherheit und die Verfügbarkeit der Aufzugsanlage durch die Möglichkeit von nachfolgend durchgeführten ständigen Selbsttests erhöht werden.

Erfindungsgemäss ergeht mit der Mitteilung für einen Bediener, das knotenspezifische Daten nicht in der Teilnehmerliste vorhanden sind, eine Anfrage, ob die nicht vorhandenen knotenspezifischen Daten in der Teilnehmerliste abgelegt werden sollen.

Bevorzugt oder alternativ ergeht mit der Mitteilung für einen Bediener, das in der Teilnehmerliste knotenspezifische Daten gespeichert sind, welche jedoch von der Steuereinheit nicht erfasst worden sind, eine Anfrage, ob diese knotenspezifischen Daten aus der Teilnehmerliste entfernt werden sollen.

Auch kann vorgesehen sein, dass zunächst erneut versucht wird, die knotenspezifischen Daten des betroffenen Busknotens zu ermitteln, bevor die Anfrage für einen Bediener ergeht.

Eine erfindungsgemässe Aufzugsanlage kann also mit einer vordefinierten Teilnehmerliste in Betrieb genommen werden. In einem solchen Fall sollten keine Abweichungen zwischen Teilnehmerliste und ermittelten knotenspezifischen Daten vorliegen, so dass die Inbetriebnahme oder zumindest eine erste Stufe der Inbetriebnahme sofort abgeschlossen wird.

Alternativ kann die Teilnehmerliste leer sein oder nur teilweise knotenspezifische Daten enthalten, beispielsweise kontenspezifische Daten, die typischerweise bei jeder Aufzugsanlage vorhanden sind, wie ein mit einer Kabinentür zusammenwirkender Busknoten, oder Busknoten welche eine Sicherheitsbremse überwachen usw.

Auch kann vorgesehen sein, dass die Busknoten nach und nach angeschlossen oder eingeschaltet werden. Die Steuereinheit überwacht ständig die Aufzugsanlage und erkennt sofort, ob neue Busknoten angeschlossen oder in Betrieb genommen worden sind. Je nach dem, ob die knotenspezifischen Daten bereits in der Teilnehmerliste vorhanden sind oder nicht, ergeht dann eine entsprechende Mitteilung für einen Bediener.

Es ist auch denkbar, eine leere Teilnehmerliste vor Ort manuell zu konfigurieren, bevor die Aufzugsanlage in Betrieb genommen wird. Ebenso sind automatische Konfigurationen via Datenspeicher oder über Fernwartung möglich. Gemeinsam bei den verschiedenen Varianten ist, dass eine Sicherheitsanordnung alle angeschlossenen Sensoren oder Teilnehmer lernt und zusätzlich bevorzugt registriert, ob der Sensor seinen Zustand geändert hat. Damit liegt eine jederzeit aktuelle Liste der angeschlossenen und damit aktiven Sensoren vor.

Weiter bevorzugt wird bei der Erfassung ebenfalls ermittelt, ob bei einem Busknoten eine Änderung von knotenspezifischen Daten, insbesondere von zustandsspezifischen Daten, stattgefunden hat, und somit ob der Busknoten aktiv ist oder war.

Es kann auch ermittelt werden, wann diese Änderung von knotenspezifischen Daten stattgefunden hat. Daraus kann geschlossen werden, wann der Busknoten zuletzt aktiv war.

Weiter kann bei der Erfassung eine Änderung von knotenspezifischen Daten, insbesondere von zustandsspezifischen Daten, erzwungen werden, beispielsweise indem eine Zustandsänderung bei einem zugeordneten Sensor ausgelöst wird. Es soll dabei ferner ermittelt werden, ob der jeweilige Busknoten ansprechbar ist.

Sind alle Busknoten erfasst und in der Teilnehmerliste gespeichert worden, kann schliesslich eine Mitteilung für einen Bediener ergehen, die Inbetriebnahme vorläufig oder definitiv abzuschliessen und die Aufzugsanlage für einen ggf. vorläufigen Normalbetrieb freizugeben. Alternativ kann diese Mitteilung für einen Bediener ergehen, wenn zudem die Plausibilitätsprüfung und/oder der Vergleich der Teilnehmerliste mit den erfassten Busknoten abgeschlossen ist.

Bevorzugt findet nach Abschluss der vorläufigen Inbetriebnahme eine Funktionsprüfung der Aufzugsanlage statt. Dabei können bestimmte Busknoten oder Gruppen von Busknoten gesondert und busknotenspezifisch oder gruppenspezifisch geprüft werden. Es wird durch die Steuereinheit ein Ereignis der Aufzugsanlage erzwungen und ermittelt, ob das Ereignis eine dem Ereignis entsprechende Änderung von knotenspezifischen Daten zur Folge hat.

Beispielsweise können Busknoten, welche den Zustand von Kabinen- und Etagentüren überwachen, getestet werden, indem eine bestimmte Etage mit der Aufzugskabine angefahren wird und überprüft wird, ob die dafür zuständigen Busknoten ein Öffnen und/oder Schliessen der jeweils zugeordneten Türen der Steuereinheit melden. Somit kann beispielsweise geprüft werden, ob die richtigen Busknoten am richtigen Ort angeordnet worden sind.

Mittels Quervergleichen mit anderen, mit dem Ereignis in Beziehung stehenden Busknoten kann die Funktionsprüfung ergänzt werden.

Im obigen Beispiel kann unter Heranziehung der Daten aus einem Busknoten, der die Position der Aufzugskabine ermittelt, die Funktionsprüfung ergänzt werden, indem sichergestellt wird, dass es sich bei der angefahrenen Etage auch tatsächlich um die richtige Etage handelt.

Busknoten können zumindest teilweise redundant angeordnet werden, so dass Fehlanordnungen von Busknoten zumindest teilweise ausgeschlossen werden können.

Weiter bevorzugt findet im Anschluss an die Funktionsprüfung oder gleichzeitig mir dieser eine Plausibilitätsprüfung statt. Bei der Plausibilitätsprüfung wird ermittelt, ob die ermittelten knotenspezifischen Daten vordefinierten logischen Kriterien entsprechen. Dabei wird insbesondere die Anordnung der Busknoten überprüft. Unmögliche Kombinationen von Busknoten wie beispielsweise "eine Schachttür" und "mehrere Kabinentüren" werden für den normalen Betrieb nicht freigegeben.

Wenn die Plausibilitätsprüfung ergeben sollte, dass eine unmögliche Kombination von Busknoten vorliegt, kann die Inbetriebnahme bevorzugt automatisch wieder gestartet werden. Alternativ kann die Inbetriebnahme auch manuell wieder gestartet werden. Die Inbetriebnahme kann je nach Grund für die fehlgeschlagene Plausibilitätsprüfung ab erstem Schritt, aber gegebenenfalls auch ab zweitem Schritt gestartet werden.

Bevorzugt sind Informationen von einem Bediener eingebbar, welche für die Plausibilitätsprüfung herangezogen werden. Beispielsweise kann eine Anzahl von in einem Gebäude vorhandenen Etagen, welche angefahren werden können, eingegeben werden. Damit können bei der Plausibilitätsprüfung Kombinationen von Busknoten ausgeschlossen werden, welche der eingegebenen Anzahl von Etagen nicht entsprechen. Die Erfindung betrifft ausserdem eine Vorrichtung zur Inbetriebnahme einer Aufzugsanlage. Die Vorrichtung weist eine Steuereinheit auf, welche zum Durchführen der vorgenannten Schritte ausgebildet ist.

Die Erfindung wird nachfolgend anhand von Ausführungsbeispielen besser beschrieben. Es zeigen:
- Figur 1: schematisch eine mögliche Anordnung einer erfindungsgemässen Aufzugsanlage;
- Figur 2: schematisch eine mögliche Gestaltung einer Teilnehmerliste;
- Figur 3: schematisch eine mögliche Gestaltung einer Mitteilung für einen Bediener.

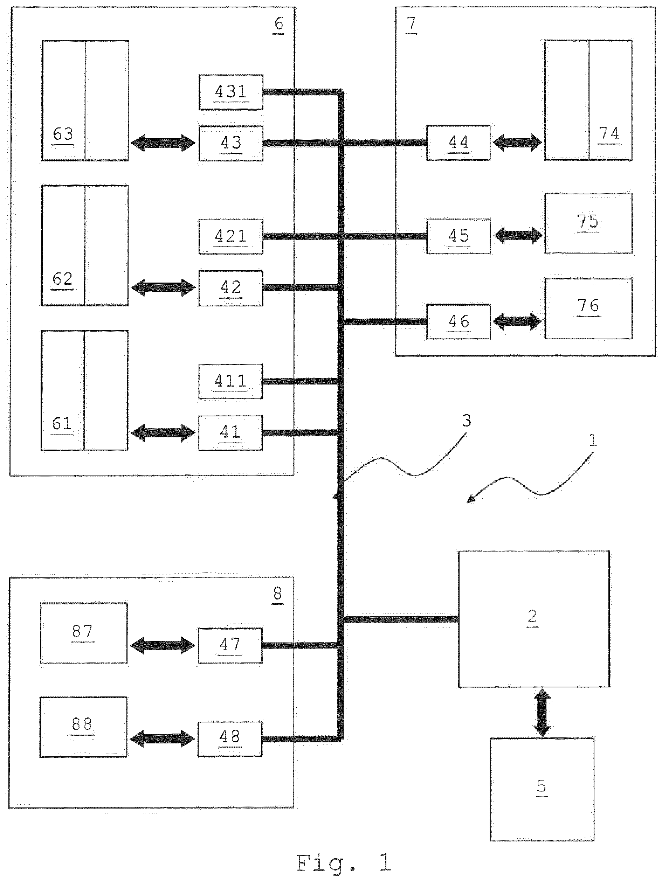

Die in der Figur 1 schematisch dargestellte Aufzugsanlage 1 umfasst eine Steuereinheit 2, welche über einen Bus 3 mit einer Mehrzahl von Busknoten 41 bis 48 verbunden ist.

Mit dem Bezugszeichen 6 ist schematisch ein Schacht eines Gebäudes dargestellt, im welchem die Aufzugsanlage 1 eingebaut ist. Das Gebäude weist exemplarisch drei Etagen auf, wobei jede Etage mit einer Schachttür 61, 62 bzw. 63 ausgestattet ist. Dem Busknoten 41 ist die Schachttür 61, dem Busknoten 42 die Schachttür 62 und dem Busknoten 43 die Schachttür 63 zugeordnet.

Den jeweiligen Busknoten 41, 42 oder 43 ist jeweils ein Sensor zugeordnet, welcher Informationen betreffend den Zustand der zugeordneten Schachttür 61, 62 oder 63 (offen, geschlossen, verriegelt) erfasst und ggf. eine Störungsmeldung für die Steuereinheit 2 erzeugen kann. Ferner können Busknoten 411, 421 und 431 vorhanden sein, welche jeweils einem Schalter zum Anfordern des Aufzugs zugeordnet sind.

Die Aufzugsanlage 1 verfügt ferner über eine Aufzugskabine 7. Die Aufzugskabine 7 ist mit einer Aufzugstür 74 ausgestattet, welche ebenfalls einem Busknoten 44 zugeordnet ist. Dem Busknoten 44 ist ein Sensor zugeordnet, welcher Informationen betreffend den Zustand der zugeordneten Aufzugstür 74 (offen, geschlossen, verriegelt) ermittelt und ggf. eine Störungsmeldung für die Steuereinheit 2 erzeugen kann.

Die Aufzugsanlage 1 kann ferner über einen Busknoten 45 und einen Busknoten 46 verfügen, welche jeweils einer in der Aufzugskabine 7 angeordneten Bedieneinheit 75 und einem Notschalter 76 zugeordnet sind. Die Bedieneinheit 75 dient der Steuerung der Aufzugsanlage 1 durch einen Benutzer und ermöglicht die Anwahl einer Etage, welche angefahren werden soll, und umfasst auch Schalter zum Öffnen und/oder Schliessen der Türen, eine optische Anzeige und/oder eine Einrichtung zur Ausgabe von Sprachmitteilungen und eine Sprechanlage. Durch Betätigung des Notschalters 76 kann in einer Notfallsituation die Aufzugsanlage 1 zum sofortigen Stillstand gebracht werden.

In einem Antriebsraum 8 ist ferner eine Antriebseinheit angeordnet, welche mit einer Notbremse 87 und einem Drehzahlsensor 88 ausgestattet ist, die jeweils einem Busknoten 47 und 48 zugeordnet sind. In einer bevorzugten Ausführung ist die Antriebseinheit im Schacht angeordnet, wobei ein separater Antriebsraum entfällt.

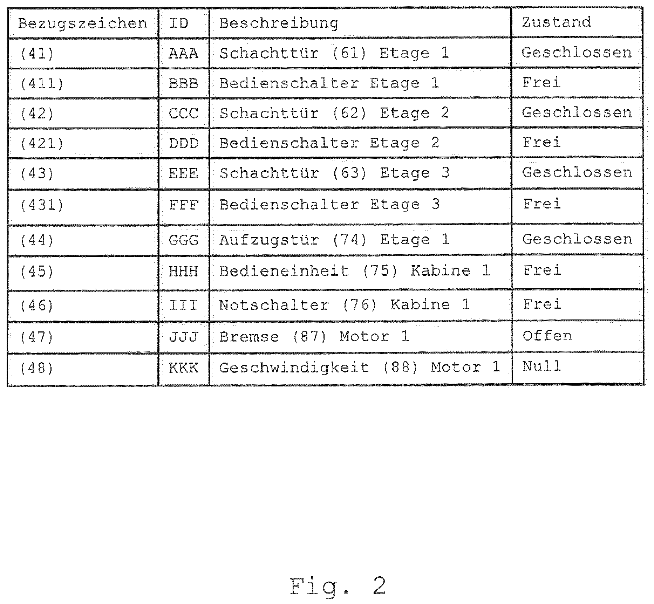

Bei einer Inbetriebnahme einer Aufzugsanlage 1 ermittelt die Steuereinheit 2 die in der Aufzugsanlage eingebauten und aktiven Busknoten 41 bis 48 und die knotenspezifischen Daten eines jeden Busknotens 41 bis 48. Die ermittelten Daten werden beispielsweise in einer wie in der in Figur 2 dargestellten Tabelle zwischengespeichert.

Die erfassten knotenspezifischen Daten werden dann mittels der Steuereinheit automatisch mit einer Teilnehmerliste 5 verglichen, welche in diesem Ausführungsbeispiel leer ist. Aus diesem Grund ergeht mangels Übereinstimmung mit der Teilnehmerliste 5 für jeden ermittelten Busknoten 41 bis 48 eine Anfrage an einen Techniker, welcher für die Inbetriebnahme der Aufzugsanlage 1 zuständig ist, ob der jeweilige ermittelte Busknoten 41 bis 48 in der Teilnehmerliste gespeichert werden soll oder nicht.

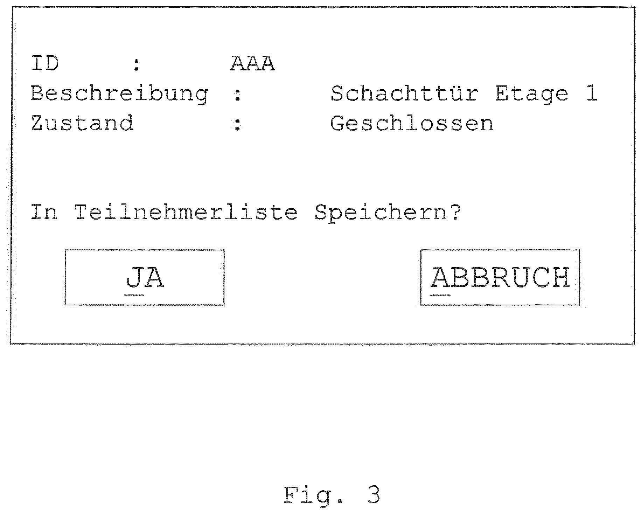

Eine beispielhafte Mitteilung ist schematisch in der Figur 3 dargestellt.

Bei Bestätigung des ermittelten Busknotens 41 erhält der Techniker eine neue Mitteilung zur Speicherung eines weiteren ermittelten Busknotens, in diesem Fall des Busknotens 411.

Bei Abbruch gelangt der Techniker zu einer übergeordneten Menüebene, wo er beispielsweise die Inbetriebnahme erneut starten kann, oder die Teilnehmerliste bearbeiten kann.

Der derart in der Teilnehmerliste 5 gespeicherte Busknoten 41 kann dann im Anschluss einer ersten Funktionsprüfung unterzogen werden. Die Steuereinheit 2 steuert die Schachttür 61 und lässt diese öffnen. Der dem Busknoten 41 zugeordnete Sensor erfasst die Öffnung der Schachttür 61 und meldet diese Zustandsänderung der Steuereinheit 2. Durch die gemeldete Zustandsänderung wird somit die Funktionsfähigkeit des Busknotens 41 getestet.

Nachdem alle ermittelten Busknoten in der Teilnehmerliste 5 gespeichert worden sind, erfolgt eine Mitteilung, dass die erste Stufe der Inbetriebnahme abgeschlossen ist. Es ergeht dann eine Aufforderung zum Abschliessen der ersten Stufe der Inbetriebnahme.

Nach erfolgreichem Abschluss der ersten Stufe der Inbetriebnahme erfolgt eine erweiterte Funktionsprüfung der gesamten Aufzugsanlage 1. An dieser Stelle sei vermerkt, dass die oben genannte erste Funktionsprüfung auch entfallen kann, wenn die erweiterte Funktionsprüfung durchgeführt wird.

Die Steuereinheit 2 kann beispielsweise eine Betätigung des Schalters des Busknotens 421 in der zweiten Etage simulieren, so dass mit der Aufzugskabine 7 die zweite Etage angefahren wird. Beim Anfahren der zweiten Etage erhält die Steuereinheit 2 vom Busknoten 48 knotenspezifische Daten über die Drehzahl des Motors vom Drehzahlsensor 88, welche eine Bewegung der Aufzugskabine 7 kennzeichnen.

Wenn die Aufzugskabine 7 die gewünschte Etage erreicht hat, öffnet sich die Aufzugstür 74 gleichzeitig mit der Schachttür 62. Die jeweiligen Busknoten 44 bzw. 42 melden der Steuereinheit 2 die Zustandsänderung, welche die Funktionsfähigkeit beider Busknoten 42 und 44 bestätigt. Entsprechend wird bei den übrigen Etagen verfahren, wobei auch der Busknoten 45 getestet wird, indem die Aufforderung zum Anfahren einer bestimmten Etage auch von der Bedieneinheit 75 ergeht.

Zur Prüfung des Notschalters 76 wird durch den Busknoten 46 eine Betätigung des Schalters simuliert und durch entsprechende Mitteilung von knotenspezifischen Daten der Busknoten 47 und 48 ermittelt, ob die Sicherheitsbremse 87 sofort die Aufzugskabine 7 zum Stillstand bringt.

Es ist ersichtlich, dass eine solche Funktionsprüfung auch klassisch erfolgen kann, indem der Techniker von der Steuereinheit 2 dazu aufgefordert wird, bestimmte Schritte durchzuführen. Beispielsweise kann der Techniker mittels eines mobilen, drahtlos mit der Steuereinheit 2 verbundenen Rechners die Funktionsprüfung alleine durchführen.

Gleichzeitig mit der erweiterten Funktionsprüfung oder im Anschluss an diese erfolgt auch eine Plausibilitätsprüfung der Aufzugsanlage. Die Steuereinheit überprüft ob die ermittelte Anordnung von Busknoten 41 bis 48 nach vorgegebenen und/oder von den ermittelten knotenspezifischen Daten abhängigen, logischen Kriterien möglich ist.

Nach erfolgreichem Abschluss der Funktions- und Plausibilitätsprüfung ergeht eine Mitteilung zur Freigabe der Aufzugsanlage 1 für einen Normalbetrieb.

Eine alternative Möglichkeit der Inbetriebnahme besteht darin, dass bei der Planung der Aufzugsanlage 1 bereits eine Teilnehmerliste 5 bereitgestellt wird. Diese dient einerseits als Anleitung, an welcher Stelle der Aufzugsanlage 1 die Busknoten 41 bis 48 angeordnet werden müssen. Andererseits wird die Teilnehmerliste 5 dann für die Inbetriebnahme herangezogen, wobei von der Steuereinheit 2 automatisch ermittelt wird, ob die Busknoten 41 bis 48 vorhanden sind und mittels Funktions- und Plausibilitätsprüfung festgestellt wird, ob die Busknoten 41 bis 48 korrekt installiert worden und funktionsfähig sind.

## Patentansprüche

1. Verfahren zur Inbetriebnahme einer Aufzugsanlage (1) mit einer Steuereinheit (2), einem Bus (3) und einer Mehrzahl von Busknoten (41, 42, 43, 44, 45, 46, 47, 48, 411, 421, 431), die mit der Steuereinheit (2) über den Bus (3) verbunden sind, wobei das Verfahren folgende Schritte umfasst:
(A) für jeden Busknoten (41, 42, 43, 44, 45, 46, 47, 48, 411, 421, 431) werden von der Steuereinheit (2) knotenspezifische Daten erfasst,
(B) für jeden Busknoten (41, 42, 43, 44, 45, 46, 47, 48, 411, 421, 431) werden mittels der Steuereinheit die erfassten knotenspezifischen Daten mit Daten einer Teilnehmerliste (5) verglichen, und
(C) für Abweichungen zwischen Daten der Teilnehmerliste (5) und den erfassten knotenspezifischen Daten ergeht eine Mitteilung für einen Bediener
**dadurch gekennzeichnet, dass** das Verfahren die weiteren Schritte umfasst:
- Prüfen, ob knotenspezifische Daten in der Teilnehmerliste (5) gespeichert sind,
- Anfordern einer Bestätigung durch einen Bediener, ob die ermittelten knotenspezifischen Daten in der Teilnehmerliste (5) gespeichert werden sollen,
- Speichern von Daten, wenn dies durch einen Bediener bestätigt wird.

2. Verfahren nach Anspruch 1, **gekennzeichnet durch** die Schritte
- Prüfen, ob in der Teilnehmerliste (5) Daten gespeichert sind, welche nicht von der Steuereinheit (2) erfasst worden sind,
- Anfordern einer Bestätigung durch einen Bediener, ob die in der Teilnehmerliste (5) gespeicherten Daten aus der Teilnehmerliste gelöscht werden sollen,
- Löschen der nicht erfassten Daten, wenn dies durch den Bediener betätigt wird.

3. Verfahren nach einem der vorhergehenden Ansprüche, **dadurch gekennzeichnet, dass** bei der Erfassung der knotenspezifischen Daten Informationen betreffend den Zustand des Busknotens (41, 42) erfasst werden.

4. Verfahren nach Anspruch 3, **dadurch gekennzeichnet, dass** bei der Erfassung von knotenspezifischen Daten eine Zustandsänderung des jeweiligen Busknotens (41, 42, 43, 44, 45, 46, 47, 48, 411, 421, 431) von der Steuereinheit (2) erzwungen wird.

5. Verfahren nach einem der Ansprüche 1 bis 4, **dadurch gekennzeichnet, dass** eine vordefinierte Teilnehmerliste (5) verwendet wird.

6. Verfahren nach einem der Ansprüche 1 bis 4, **dadurch gekennzeichnet, dass** eine Teilnehmerliste (5) verwendet wird, welche leer ist oder welche nur teilweise knotenspezifische Daten enthält.

7. Verfahren nach einem der Ansprüche 1 bis 6, **dadurch gekennzeichnet, dass** mittels der Steuereinheit (2) kontinuierlich geprüft wird, ob neue Busknoten (41, 42, 43, 44, 45, 46, 47, 48, 411, 421, 431) angeschlossen worden sind.

8. Verfahren nach einem der Ansprüche 1 bis 7, **dadurch gekennzeichnet, dass** bei der Erfassung der knotenspezifischen Daten ermittelt wird, ob bei einem Busknoten (41, 42, 43, 44, 45, 46, 47, 48, 411, 421, 431) eine Änderung von knotenspezifischen Daten, insbesondere von zustandsspezifischen Daten, stattgefunden hat.

9. Verfahren nach Anspruch 8, **dadurch gekennzeichnet, dass** ermittelt wird, wann eine Änderung von knotenspezifischen Daten stattgefunden hat.

10. Verfahren nach einem der Ansprüche 1 bis 9, **dadurch gekennzeichnet, dass** nach Abschluss der vorläufigen Inbetriebnahme eine Funktionsprüfung der Aufzugsanlage (1) und/oder eine Plausibilitätsprüfung erfolgen.

11. Vorrichtung zur Inbetriebnahme einer Aufzugsanlage (1), insbesondere zum Durchführen eines Verfahrens nach einem der Ansprüche 1 bis 10,
mit einer Steuereinheit (2),
einem Bus (3),
einer Mehrzahl von Busknoten (41, 42, 43, 44, 45, 46, 47, 48, 411, 421, 431),
wobei die Busknoten (41, 42, 43, 44, 45, 46, 47, 48, 411, 421, 431) über den Bus (3) mit der Steuereinheit (2) verbunden sind, wobei die Steuereinheit (2) ausgebildet ist
- zum Erfassen von knotenspezifischen Daten für jeden Busknoten (41, 42, 43, 44, 45, 46, 47, 48, 411, 421, 431)
- zum Vergleich der erfassten knotenspezifischen Daten mit Daten einer Teilnehmerliste für jeden Busknoten (41, 42, 43, 44, 45, 46, 47, 48, 411, 421, 431) und
- zum Erzeugen einer Mitteilung für einen Bediener für Abweichungen zwischen Daten der Teilnehmerliste (5) und den erfassten knotenspezifischen Daten,
**dadurch gekennzeichnet, dass**
die Steuereinheit (2) ausgebildet ist
- zum Prüfen, ob knotenspezifische Daten in der Teilnehmerliste (5) gespeichert sind,
- zum Anfordern einer Bestätigung durch einen Bediener, ob die ermittelten knotenspezifischen Daten in der Teilnehmerliste (5) gespeichert werden sollen,
- zum Speichern von Daten, wenn dies durch einen Bediener bestätigt wird.

12. Aufzugsanlage mit einer Vorrichtung gemäss Anspruch 11.

## Claims

1. Method for commissioning an elevator system (1) comprising a control unit (2), a bus (3) and a plurality of bus nodes (41, 42, 43, 44, 45, 46, 47, 48, 411, 421, 431) which are connected to the control unit (2) by means of the bus (3), said method comprising the following steps:
(A) node-specific data are registered for each bus node (41, 42, 43, 44, 45, 46, 47, 48, 411, 421, 431) by means of the control unit (2),
(B) the node-specific data that are registered for each bus node (41, 42, 43, 44, 45, 46, 47, 48, 411, 421, 431) are compared to data of a participant list (5) by means of the control unit, and
(C) a message is issued for an operator for deviations between data of the participant list (5) and the registered node-specific data,
**characterized in that** the method comprises the following steps:
- checking whether node-specific data are saved in the participant list (5),
- requesting a confirmation by an operator as to whether the detected node-specific data should be saved in the participant list (5),
- saving the data, if this is confirmed by an operator.

2. Method according to claim 1, **characterized by** the following steps:
- checking whether data which have not been registered in the control unit (2) are saved in the participant list (5),
- requesting a confirmation by an operator as to whether the data saved in the participant list (5) should be deleted from the participant list,
- deleting the unregistered data, if this is confirmed by an operator.

3. Method according to either of the preceding claims, **characterized in that** when registering the node-specific data, items of information regarding the state of the bus node (41, 42) are registered.

4. Method according to claim 3, **characterized in that** when registering node-specific data, a change in state of the relevant bus node (41, 42, 43, 44, 45, 46, 47, 48, 411, 421, 431) is forced by the control unit (2).

5. Method according to any of claims 1 to 4, **characterized in that** a predefined participant list (5) is used.

6. Method according to any of claims 1 to 4, **characterized in that** a participant list (5) is used which is empty, or which contains only partly node-specific data.

7. Method according to any of claims 1 to 6, **characterized in that** it is continuously checked, by means of the control unit (2), whether new bus nodes (41, 42, 43, 44, 45, 46, 47, 48, 411, 421, 431) have been connected.

8. Method according to any of claims 1 to 7, **characterized in that** when registering node-specific data, it is determined whether a change in node-specific data, in particular of state-specific data, has occurred at a bus node (41, 42, 43, 44, 45, 46, 47, 48, 411, 421, 431).

9. Method according to claim 8, **characterized in that** it is determined when a change of node-specific data occurred.

10. Method according to any of claims 1 to 9, **characterized in that** after completion of the temporary commissioning, a performance test of the elevator system (1), and/or a plausibility test, takes place.

11. Device for commissioning an elevator system (1), in particular for executing a method according to any of claims 1 to 10,
comprising a control unit (2),
a bus (3), and
a plurality of bus nodes (41, 42, 43, 44, 45, 46, 47, 48, 411, 421, 431),
the bus nodes (41, 42, 43, 44, 45, 46, 47, 48, 411, 421, 431) being connected to the control unit (2) by means of the bus (3), the control unit (2) is being designed
- to register node-specific data for each bus node (41, 42, 43, 44, 45, 46, 47, 48, 411, 421, 431),
- to compare the registered node-specific data to data of a participant list for each bus node (41, 42, 43, 44, 45, 46, 47, 48, 411, 421, 431), and
- to generate a message for an operator for deviations between data of the participant list (5) and the registered node-specific data
**characterized in that** the conrol unit (2) is designed
- to check whether node-specific data are saved in the participant list (5),
- to request a confirmation by an operator as to whether the detected node-specific data should be saved in the participant list (5),
- to save the data, if this is confirmed by an operator.

12. Elevator system comprising a device according to claim 11.

## Revendications

1. Procédé de mise en service d'une installation d'ascenseur (1) comprenant une unité de commande (2), un bus (3) et une pluralité de noeuds de bus (41, 42, 43, 44, 45, 46, 47, 48, 411, 421, 431) qui sont reliés à l'unité de commande (2) par le biais du bus (3), le procédé comportant les étapes suivantes :
(A) pour chaque noeud de bus (41, 42, 43, 44, 45, 46, 47, 48, 411, 421, 431), des données spécifiques au noeud sont acquises par l'unité de commande (2),
(B) pour chaque noeud de bus (41, 42, 43, 44, 45, 46, 47, 48, 411, 421, 431), les données spécifiques au noeud acquises sont comparées à des données d'une liste d'abonnés (5) au moyen de l'unité de commande, et
(C) pour des écarts entre des données de la liste d'abonnés (5) et les données spécifiques au noeud acquises, un message est envoyé à un utilisateur,
**caractérisé en ce que** le procédé comporte les étapes supplémentaires consistant à :
- contrôler si des données spécifiques au noeud sont enregistrées dans la liste d'abonnés (5),
- demander à un utilisateur de confirmer si les données spécifiques au noeud déterminées doivent être enregistrées dans la liste d'abonnés (5),
- enregistrer des données lorsque cela a été confirmé par un utilisateur.

2. Procédé selon la revendication 1, **caractérisé par** les étapes consistant à :
- contrôler si des données sont enregistrées dans la liste d'abonnés (5), lesquelles données n'ont pas été acquises par l'unité de commande (2),
- demander à un utilisateur de confirmer si les données enregistrées dans la liste d'abonnés (5) doivent être supprimées de la liste d'abonnés,
- supprimer les données non acquises lorsque cela a été confirmé par l'utilisateur.

3. Procédé selon l'une des revendications précédentes, **caractérisé en ce que**, lors de l'acquisition des données spécifiques au noeud, des informations relatives à l'état du noeud de bus (41, 42) sont acquises.

4. Procédé selon la revendication 3, **caractérisé en ce que**, lors de l'acquisition de données spécifiques au noeud, un changement d'état du noeud de bus (41, 42, 43, 44, 45, 46, 47, 48, 411, 421, 431) respectif est imposé par l'unité de commande (2).

5. Procédé selon l'une des revendications 1 à 4, **caractérisé en ce qu'**une liste d'abonnés (5) prédéfinie est utilisée.

6. Procédé selon l'une des revendications 1 à 4, **caractérisé en ce qu'**une liste d'abonnés (5) est utilisée, laquelle est vide ou laquelle ne contient que des données partiellement spécifiques au noeud.

7. Procédé selon l'une des revendications 1 à 6, **caractérisé en ce que** l'on contrôle continuellement au moyen de l'unité de commande (2) si de nouveaux noeuds de bus (41, 42, 43, 44, 45, 46, 47, 48, 411, 421, 431) ont été raccordés.

8. Procédé selon l'une des revendications 1 à 7, **caractérisé en ce que**, lors de l'acquisition des données spécifiques au noeud, on détermine si une modification de données spécifiques au noeud, en particulier de données spécifiques à l'état, a eu lieu pour un noeud de bus (41, 42, 43, 44, 45, 46, 47, 48, 411, 421, 431).

9. Procédé selon la revendication 8, **caractérisé en ce qu'**on détermine quand une modification de données spécifiques au noeud a eu lieu.

10. Procédé selon l'une des revendications 1 à 9, **caractérisé en ce qu'**une fois la mise en service préliminaire terminée, un contrôle de fonctionnement de l'installation d'ascenseur (1) et/ou un contrôle de plausibilité sont effectués.

11. Dispositif permettant la mise en service d'une installation d'ascenseur (1), en particulier permettant la mise en oeuvre d'un procédé selon l'une des revendications 1 à 10,
comprenant une unité de commande (2),
un bus (3),
une pluralité de noeuds de bus (41, 42, 43, 44, 45, 46, 47, 48, 411, 421, 431),
les noeuds de bus (41, 42, 43, 44, 45, 46, 47, 48, 411, 421, 431) étant reliés à l'unité de commande (2) par le biais du bus (3), l'unité de commande (2) étant conçue
- pour acquérir des données spécifiques à un noeud pour chaque noeud de bus (41, 42, 43, 44, 45, 46, 47, 48, 411, 421, 431),
- pour comparer les données spécifiques au noeud acquises à des données d'une liste d'abonnés pour chaque noeud de bus (41, 42, 43, 44, 45, 46, 47, 48, 411, 421, 431), et
- pour produire un message destiné à un utilisateur pour des écarts entre des données de la liste d'abonnés (5) et les données spécifiques au noeud acquises,
**caractérisé en ce que**
l'unité de commande (2) est conçue
- pour contrôler si des données spécifiques au noeud sont enregistrées dans la liste d'abonnés (5),
- pour demander à un utilisateur de confirmer si les données spécifiques au noeud déterminées doivent être enregistrées dans la liste d'abonnés (5),
- pour enregistrer des données lorsque cela a été confirmé par un utilisateur.

12. Installation d'ascenseur comprenant un dispositif selon la revendication 11.
